# EUROPÄISCHE PATENTSCHRIFT

(11) **EP 1 731 825 B1**
(45) Veröffentlichungstag und Bekanntmachung des Hinweises auf die Patenterteilung: **26.03.2008**
(21) Anmeldenummer: 06011035.0
(22) Anmeldetag: 30.05.2006
(51) Int. Cl.: F16M 13/02

(54) **Haltevorrichtung zur Anbringung eines Bildschirmes in räumlicher Zuordnung zu einer Wandesse**
Supporting device for positioning a display relatively to a fume extractor
Dispositif de support pour positionner un écran de visualisation par rapport à une hotte

(30) Priorität: 10.06.2005 DE 202005009133 U
(43) Veröffentlichungstag der Anmeldung: 13.12.2006
(73) Patentinhaber: Gerhard, Markus, 90439 Nürnberg (DE)
(72) Erfinder: Gerhard, Markus, 90439 Nürnberg (DE)
(74) Vertreter: Hübner, Gerd

(56) Entgegenhaltungen:
- EP-A- 1 344 972
- WO-A-00/73024
- DE-U1- 9 413 545
- DE-U1-3202005 009 13
- JP-A- 11 275 490
- US-A- 3 944 178
- US-A- 5 400 993

## Beschreibung

Die Erfindung betrifft eine Haltevorrichtung zur Anbringung eines Bildschirmes, insbesondere eines Flachbildschirmes, in räumlicher Zuordnung zu einer Wandesse mit einem Haubenteil und einem sich davon nach oben erstreckenden Abzugskanal.

Zum Hintergrund der Erfindung ist festzuhalten, dass einerseits Multimedia-Einrichtungen, wie Videogeräte, DVD-Abspielgeräte, kompakte Personalcomputer etc., zunehmend Verbreitung und Anwendung auch im Küchenbereich finden. Ein grundsätzliches Problem hierbei ist die Positionierung des zugehörigen Bildschirmes, da entsprechende Stellflächen bei den oft beengten Platzverhältnissen in Küchen rar sind.

Andererseits werden immer mehr moderne Küchen zur Vermeidung oder zumindest Reduzierung störender Kochgerüche mit Dunstabzugshauben ausgerüstet. Für diese sind zwei Grundtypen bekannt, nämlich zum einen als Unterbaugerät an den Küchen-Oberschränken und zum anderen als so genannte Wandesse mit einem Haubenteil und einem sich davon nach oben erstreckenden Abzugskanal, der in der Regel aus einem entsprechend abgekanteten Blech gebildet ist, an der Wand nach oben verläuft und gegebenenfalls ein Abzugsrohr für die Haubenabsaugung aufnimmt.

Der Bereich oberhalb des Haubenteils um den Abzugskanal ist dabei in aller Regel frei zugänglicher Raum und bietet sich für die Positionierung eines Bildschirms der eingangs erwähnten Geräte an. Ein Problem dabei ist jedoch die Tatsache, dass das Material des Abzugskanals in Form eines relativ dünnen Bleches für die Befestigung eines Bildschirmes nicht geeignet ist. Ferner scheuen es Küchennutzer in der Regel, am Abzugskanal Bohrungen oder ähnliche Halteelemente für eine Bildschirmmontage anzubringen, da bei einer späteren Abnahme des Bildschirmes unschöne Löcher in der Wandesse zurückbleiben würden.

Aus der EP 1 344 972 A ist eine Haltevorrichtung zur Anbringung eines Bildschirms gemäß dem Oberbegriff des Patentanspruches 1 angegeben. Ohne auf die Problematik der Anbringung eines Bildschirms an einer Wandesse einzugehen, zeigt diese Druckschrift eine Basiskonstruktion für eine wandmontierbare Haltevorrichtung in Form eines U-förmigen Haltebügels, an dessen Basis ein Lagerteil für den Bildschirm angeordnet ist. Diese Haltevorrichtung ist jedoch nicht an unterschiedliche Querschnittsabmessungen der Wandesse anpassbar.

Ausgehend von der geschilderten Problematik liegt der Erfindung die Aufgabe zugrunde, die Montage eines Bildschirms in räumlicher Zuordnung zu einer Wandesse auf einfache, jedoch stabile Weise und ohne Beeinträchtigung der Wandesse zu ermöglichen, wobei eine Anpassung der Haltevorrichtung an unterschiedliche Dimensionen der Wandesse möglich sein soll.

Diese Aufgabe wird durch die im Patentanspruch 1 angegebene Haltevorrichtung gelöst. Demnach weist der U-förmige Haltebügel einen teleskopisch längenveränderliche Schenkel und Basis auf. Dadurch kann ein und derselbe Haltebügel an unterschiedlichste Querschnittsmaße des Abzugskanals angepasst werden.

Mit Hilfe der Erfindung ist es also möglich, den gut einsehbaren und in aller Regel frei zugänglichen Raum oberhalb des Haubenteils einer quasi beliebig dimensionierten Wandesse für die Positionierung eines Bildschirmes nutzbar zu machen, ohne die Wandesse selbst zur Halterung des Bildschirmes heranziehen zu müssen. Insoweit kann eine Bildschirmmontage und auch -demontage ohne großen Aufwand und ohne die Wandesse in Mitleidenschaft zu ziehen, durchgeführt werden.

Durch die gemäß den Ansprüchen 2 und 3 angegebenen Rasterpositionen der die Schenkel und Basis des Haltebügels bildenden Teleskoprohre kann eine rasche Anpassung des Haltebügels an handelsübliche Wandessen mit bekannten Dimensionen des Abzugskanals vorgenommen werden.

Durch die gemäß Anspruch 4 vorgesehenen Montageplatten an den Schenkelenden des Haltebügels wird die Stabilität der Wand-Verankerung des Haltebügels deutlich verbessert.

In einer weiteren bevorzugten Ausführungsform gemäß Anspruch 5 sind im Lagerteil mindestens zwei um rechtwinklig zueinander stehende Schwenkachsen drehbare Schwenklager vorgesehen. Damit kann der Bildschirm innerhalb vorgegebener Grenzen in beliebige Raumrichtungen geneigt positioniert und somit beispielsweise entsprechend einer Hauptblickrichtung auf den Bildschirm eingestellt werden.

Durch die bevorzugten Ausbildungen gemäß den Ansprüchen 6 und 7 wird eine zuverlässige Halterung des Bildschirmes erreicht, bei der gleichzeitig der Raum hinter dem Bildschirm durch dessen Hochklappen zugänglich gemacht werden kann.

Gemäß den Ansprüchen 8 und 9 ist am Haltebügel eine Konsole zur Aufnahme eines Multimedia-Gerätes, wie beispielsweise eines Video- oder DVD-Gerätes angebracht. Die Konsole kann dabei sehr einfach als Winkelblech ausgebildet sein. Zusammen mit der Hochklappbarkeit des Bildschirmes gemäß Anspruch 7 kann eine bildschirmnahe, versteckte Positionierung des Multimedia-Geräte bei guter Zugänglichkeit gewährleistet werden.

Weitere Merkmale, Einzelheiten und Vorteile der Erfindung sind der nachfolgenden Beschreibung entnehmbar, in der ein Ausführungsbeispiel anhand der beigefügten Zeichnungen näher erläutert wird. Es zeigen:
- Fig. 1: eine perspektivische Ansicht einer Oberschrank-Zeile einer Küche mit bildschirm-bestückter Wandesse schräg von vom,
- Fig. 2: eine perspektivische Ansicht der Wandesse mit Haltevorrichtung und davon getragenem Bildschirm mit daneben angeordnetem Oberschrank der Küche schräg von hinten,
- Fig. 3: eine perspektivische Ansicht der Haltevorrichtung schräg von hinten, und
- Fig. 4: eine perspektivische Ansicht analog Fig. 3 mit verdeckten Linien.

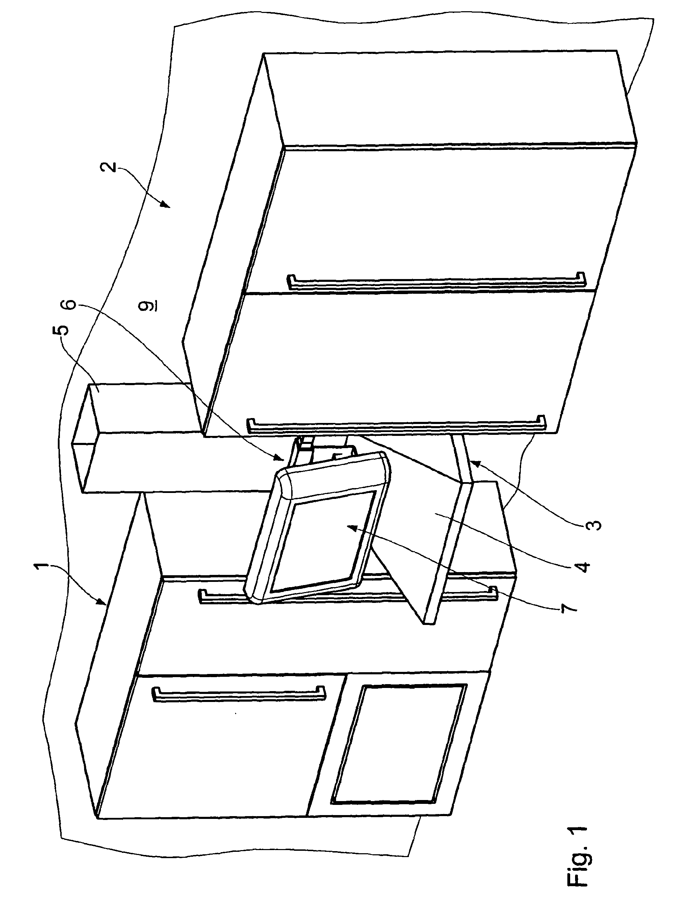

Wie aus Fig. 1 deutlich wird, ist zwischen zwei Oberschrankkombinationen 1, 2 einer Küchenzeile eine Wandesse 3 mit Haubenteil 4 und sich davon nach oben erstreckendem Abzugskanal 5 eingebaut. Die Oberschrankkombinationen 1, 2 und die Wandesse 3 sind in nicht näher dargestellter Weise an der dahinter befindlichen Küchenwand 9 montiert.

In dem frei zugänglichen und verfügbaren Raum oberhalb des Haubenteils 4 in der Lücke zwischen den beiden Oberschrankkombinationen 1, 2 ist mittels einer als Ganzes mit 6 bezeichneten Haltevorrichtung ein Flachbildschirm 7 positioniert.

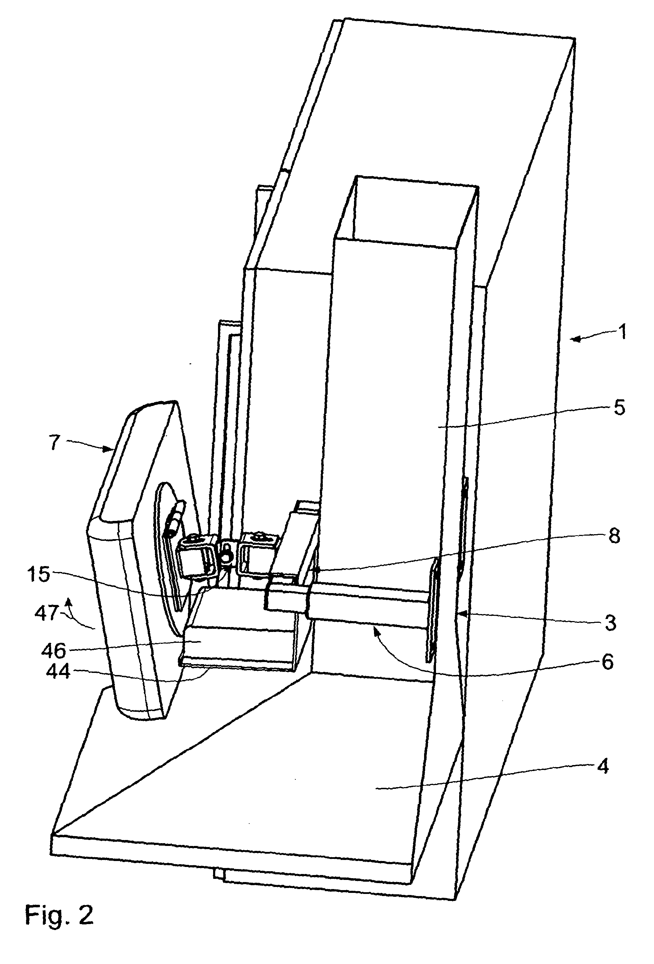

Der Aufbau der Haltevorrichtung 6 wird aus den Fig. 2 bis 4 deutlich. So ist ein U-förmiger Haltebügel 8 vorgesehen, der in der in Fig. 2 gezeigten Montageposition horizontal angeordnet ist und den Abzugskanal 5 übergreift. An den Bügelenden 10, 11 des Haltebügels 8 sind jeweils rechtwinklig dazu langgestreckt-rechteckige Montageplatten 12 angeschweißt, die in der Montageposition vertikal ausgerichtet sind und Schrauböffnungen 13 aufweisen. An der Basis 14 des Haltebügels 8 ist ein Lagerteil 15 angeordnet, das der eigentlichen Befestigung und Positionierung des Bildschirmes 7 dient.

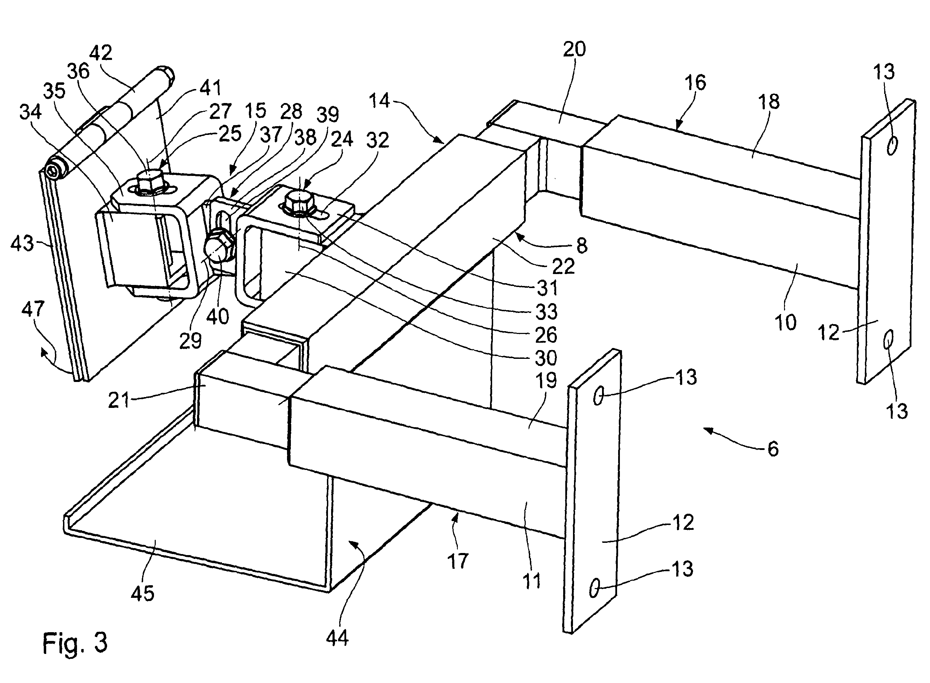

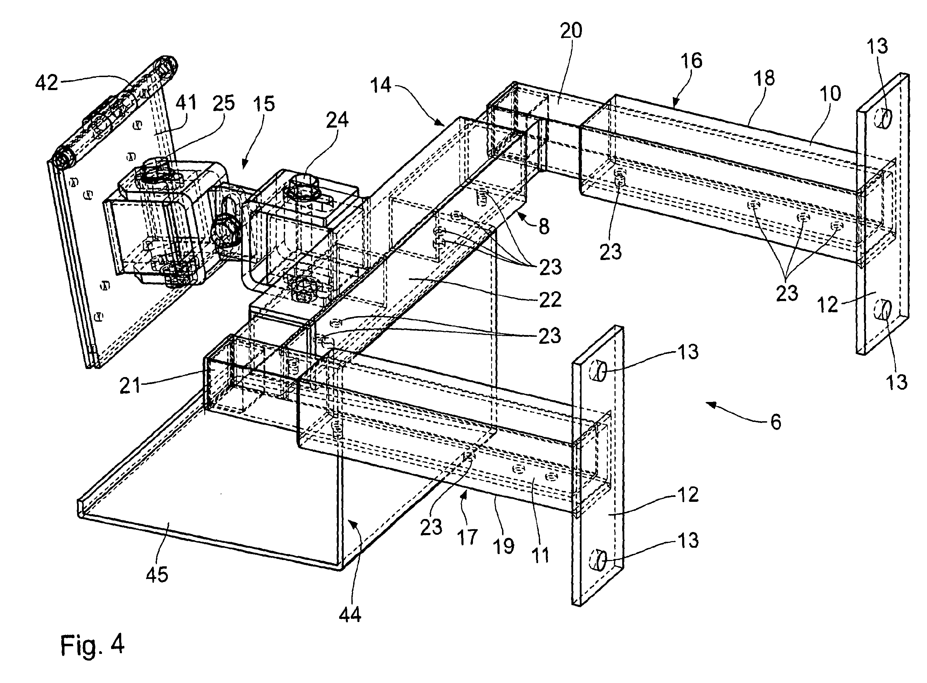

Wie aus Fig. 3 und 4 hervorgeht, sind die Schenkel 16, 17 und die Basis 14 des Haltebügels 8 durch eine teleskopische Ausgestaltung längenveränderlich. Dazu ist ein jeweils ein den Schenkeln 16, 17 zugeordnetes äußeres Teleskoprohr 18, 19 vorgesehen, in denen jeweils ein Winkelrohr 20, 21 mit einem Arm längsverschiebbar geführt ist. Die beiden anderen Arme der Winkelrohre 20, 21 bilden zusammen mit dem darauf verschiebbar geführten zentralen Teleskoprohr 22 die Basis 14 des Haltebügels 8.

Wie in Fig. 4 erkennbar ist, sind die Teleskoprohre 18, 19 und die Winkelrohre 20, 21 an vorbestimmten Rasterpositionen mit Bohrungen 23 versehen, die auf die Querschnittsmaße von Abzugskanälen 5 handelsüblicher Wandessen abgestimmt sind. Dadurch kann eine auch für Laien rasche und einfache Einstellung der Dimensionen von Basis 14 und Schenkel 16, 17 des Haltebügels 8 an das jeweils vorhandene Wandessen-Modell vorgenommen werden.

Das Lagerteil 15 ist mittig an der Basis 14 angebracht und besteht aus zwei Schwenklagern 24, 25 mit vertikal verlaufender Schwenkachse 26, 27 und einem dazwischen angeordneten Schwenklager 28 mit horizontaler Schwenkachse 29. Das innere Schwenklager 24 ist durch einen am Teleskoprohr 22 befestigten Lagerklotz 30 und einen diesen U-förmig umfassenden Flansch 31 gebildet. Letzterer weist in seinem oberen und unteren Schenkel Langlöcher 32 auf, die mit einer entsprechenden Lagerbohrung (nicht dargestellt) im Lagerklotz 30 fluchten. Durch eine Fixierschraube 33 ist der Flansch 31 am Lagerklotz 30 festgelegt, dabei jedoch schwenkbar und aufgrund der Langlöcher 32 auch in der Auslegerlänge verstellbar.

Das zweite Schwenklager 25 ist gegengleich zum Schwenklager 24 mit einem Lagerklotz 34, Flansch 35 und Fixierschraube 36 aufgebaut und bedarf damit keiner nochmaligen gesonderten Erläuterung. An den Basen der beiden Flansche 31, 35 sind jeweils vertikal ausgerichtete Laschen 37, 38 angebracht, die wiederum miteinander fluchtende Langlöcher 39 aufweisen. Die Festlegung des damit gebildeten horizontalen Schwenklagers 28 erfolgt wiederum durch eine Fixierschraube 40 in den Langlöchern 39.

Das äußere Schwenklager 25 trägt an seinem Lagerklotz 34 ein Scharnierteil 41 mit einem horizontalen Scharniergelenk 42 und einer davon getragenen Sockelplatte 43. An dieser kann der Bildschirm 7 mit seiner Rückseite über nicht näher dargestellte Verschraubungen fixiert werden. Aufgrund des Scharniergelenks 42 ist er nach vorne hochklappbar (Pfeil 47 in Fig. 2 und 3) gelagert.

Wie aus den Fig. 2 bis 4 ferner deutlich wird, ist an dem Teleskoprohr 22 der Basis 14 eine als Winkelblech ausgebildete Konsole 44 aufgehängt, auf deren Stellfläche 45 ein Multimedia-Gerät, wie ein kompakter Videorecorder oder ein DVD-Abspielgerät 46, positionierbar ist. Die Zuleitungen für dieses Gerät 46 können über die Schenkel 16, 17 und die Basis 14 des Haltebügels 8 geführt werden. Bei hochgeklapptem Bildschirm 7 ist das Gerät 46 bequem von vorne bedienbar und mit einem entsprechenden Bild-/Ton-Datenträger, wie einer DVD, bestückbar.

## Patentansprüche

1. Haltevorrichtung zur Anbringung eines Bildschirms, insbesondere eines Flachbildschirms, in räumlicher Zuordnung zu einer Wandesse (3) mit einem Haubenteil (4) und einem sich davon nach oben erstreckenden Abzugskanal (5), umfassend
- einen U-förmigen Haltebügel (8), der in Montageposition den Abzugskanal (5) übergreift und mit seinen Bügelenden (10, 11) wandfest anbringbar ist, und
- ein an der Basis (14) des Haltebügels (8) angeordnetes Lagerteil (15), an dem der Bildschirm (7) befestigbar ist,
**dadurch gekennzeichnet, dass**
- die Schenkel (16, 17) und die Basis (14) des Haltebügels (8) teleskopisch längenveränderlich sind.

2. Haltevorrichtung nach Anspruch 1, **dadurch gekennzeichnet, dass** die Schenkel (16, 17) und Basis (14) des Haltebügels (8) durch in sich verschiebbar geführte, vorzugsweise vierkantige Teleskoprohre (18, 19, 20, 21, 22) gebildet sind, die in vorbestimmten Rasterpositionen zueinander festlegbar sind.

3. Haltevorrichtung nach Anspruch 2, **dadurch gekennzeichnet, dass** die Festlegung in vorbestimmten Rasterpositionen durch in der jeweiligen Rasterposition miteinander fluchtende Bohrungen (23) in den ineinander geführten Teleskoprohren (18, 19, 20, 21, 22) erfolgt.

4. Haltevorrichtung nach einem der vorgenannten Ansprüche, **dadurch gekennzeichnet, dass** an den Bügelenden (10, 11) des Haltebügels (8) Montageplatten (12) zur Wand-Verankerung des Haltebügels (8) angebracht sind.

5. Haltevorrichtung nach einem der vorgenannten Ansprüche, **dadurch gekennzeichnet, dass** das Lagerteil (15) mindestens zwei um rechtwinklig zueinander stehende Schwenkachsen (26, 27, 29) drehbare Schwenklager (24, 25, 28) aufweist.

6. Haltevorrichtung nach einem der vorgenannten Ansprüche, **dadurch gekennzeichnet, dass** am Lagerteil (15) eine Sockelplatte (43) zur Halterung des Bildschirms (7) angebracht ist.

7. Haltevorrichtung nach Anspruch 6, **dadurch gekennzeichnet, dass** die Sockelplatte (43) an einem Scharnierteil (41) zum Hochklappen des Bildschirms (7) um eine horizontale Schwenkachse (42) angelenkt ist.

8. Haltevorrichtung nach einem der vorgenannten Ansprüche, **gekennzeichnet durch** eine Konsole (44) am Haltebügel (8) zur Aufnahme eines Multimedia-Gerätes (46).

9. Haltevorrichtung nach Anspruch 8, **dadurch gekennzeichnet, dass** die Konsole (44) als an der Basis (14) des Haltebügels (8) angeordnetes Winkelblech ausgebildet ist.

## Claims

1. A retaining device for mounting a screen, in particular a flat screen, in spatial assignment to a kitchen hood (3) comprising a hood part (4) and an extraction duct (5) extending upwardly therefrom, comprising
- a U-shaped mounting bracket (8) which embraces the extraction duct (5) in the mounting position and can be attached firmly to the wall with its bracket ends (10, 11), and
- a bearing part (15) disposed on the base (14) of the mounting bracket (8), to which the screen (7) can be affixed,
**characterised in that**
- the length of the legs (16, 17) and the base (14) of the mounting bracket (8) can be varied in a telescopic manner.

2. The retaining device according to claim 1, **characterised in that** the legs (16, 17) and the base (14) of the mounting bracket (8) are formed by preferably square telescopic tubes (18, 19, 20, 21, 22) guided displaceably into themselves, which can be fixed in predetermined indexing positions.

3. The retaining device according to claim 2, **characterised in that** the fixing in predetermined indexing positions is effected by holes (23) which are in alignment with one another in the respective indexing position in the telescopic tubes (18, 19, 20, 21, 22) guided into one another.

4. The retaining device according to any one of the preceding claims, **characterised in that** mounting plates (12) for anchoring the mounting bracket (80 to the wall are attached at the bracket ends (10, 11) of the mounting bracket (8).

5. The retaining device according to any one of the preceding claims, **characterised in that** the bearing part (15) comprises at least two pivot bearings (24, 25, 28) which can rotate about pivot axes (26, 27, 29) located at right angles to one another.

6. The retaining device according to any one of the preceding claims, **characterised in that** a base plate (43) for retaining the screen (7) is attached to the bearing part (15).

7. The retaining device according to claim 6, **characterised in that** the base plate (43) is hinged to a hinge part (41) for tilting the screen (7) upwards about a horizontal pivot axis (42).

8. The retaining device according to any one of the preceding claims, **characterised by** a bracket (44) on the mounting bracket (8) for receiving a multimedia device (46).

9. The retaining device according to claim 8, **characterised in that** the bracket (44) is configured as an angle metal sheet disposed on the base (14) of the mounting bracket (8).

## Revendications

1. Dispositif de retenue pour monter un écran, notamment un écran plat en association physique avec une cheminée murale (3), avec une partie hotte (4) et un conduit d'extraction (5) qui s'étend vers le haut à partir de ce dernier, comprenant:
- un étrier de retenue (8), en forme de U, qui en position de montage recouvre le conduit d'extraction (5) et qui par ses extrémités d'étrier (10, 11) peut être monté fixement à la paroi, et
- un élément de palier (15) disposé sur la base (14) de l'étrier de retenue (8) sur lequel l'écran (7) est susceptible d'être fixé,
**caractérisé en ce que**
- les branches (16, 17) et la base (14) de l'étrier de retenue (18) sont de longueur télescopiquement variable.

2. Dispositif de retenue selon la revendication 1, **caractérisé en ce que** les branches (16, 17) et la base (14) de l'étrier de retenue (8) sont formées par des tubes télescopiques (18, 19, 20, 21, 22) de préférence carrés, guidés en translation les uns dans les autres, qui dans des positions de trame prédéfinies sont susceptibles d'être fixés les uns aux autres.

3. Dispositif de retenue selon la revendication 2, **caractérisé en ce que** la fixation dans des positions de trame prédéfinies est assurée à travers des perçages (23) alignés les uns sur les autres dans les positions de trame respectives dans les tubes télescopiques (18, 19, 20, 21, 22) guidés les uns dans les autres.

4. Dispositif de retenue selon l'une quelconque des revendications précédentes, **caractérisé en ce que** sur les extrémités d'étrier (10, 11) de l'étrier de retenue (8) sont montées des plaques de maintien (12) pour l'ancrage au mur de l'étrier de retenue (8).

5. Dispositif de retenue selon l'une quelconque des revendications précédentes, **caractérisé en ce que** l'élément de palier (15) comporte au moins deux paliers pivotants (24, 25, 28) rotatifs autour d'axes de pivotements (26, 27, 29) perpendiculaires les uns aux autres.

6. Dispositif de retenue selon l'une quelconque des revendications précédentes, **caractérisé en ce que** sur l'élément de palier (15) est montée une plaque socle (43) pour la fixation de l'écran (7).

7. Dispositif de retenue selon la revendication 6, **caractérisé en ce que** la plaque socle (43) est articulée sur un élément de charnière (41) pour rabattre l'écran (7) vers le haut, autour d'un axe de pivotement horizontal.

8. Dispositif de retenue selon l'une quelconque des revendications précédentes, **caractérisé par** une console (44) sur l'étrier de retenue (8) pour recevoir l'appareil multimédia (46).

9. Dispositif de retenue selon la revendication 8, **caractérisé en ce que** la console (44) est conçue sous la forme d'une équerre disposée sur la base (14) de l'étrier de retenue (8).
